# EUROPEAN PATENT APPLICATION

(11) **EP 4 716 053 A1**
(43) Date of publication of application: **25.03.2026**
(21) Application number: 24937472.9
(22) Date of filing: 16.05.2024
(51) Int. Cl.: H02J 3/46, H02M 7/42

(54) **POWER ADJUSTMENT METHOD AND APPARATUS, AND COMPUTER-READABLE STORAGE MEDIUM**

(30) Priority: 30.04.2024 CN 202410547037
(71) Applicant: Sineng Electric Co., Ltd., Wuxi, Jiangsu 214174 (CN); Suzhou Qiancheng New Energy Technology Co., Ltd., Suzhou, Jiangsu 215101 (CN)
(72) Inventor: DING, Jiajie, Wuxi, Jiangsu 214174 (CN); REN, Taoyi, Wuxi, Jiangsu 214174 (CN)
(74) Representative: Bayramoglu et al.
(86) International application number: PCT/CN2024/093613
(87) International publication number: WO 2025/227433

(57) **Abstract**

This application relates to the field of power technologies, and provides a power adjustment method and apparatus and a computer-readable storage medium, to improve power adjustment flexibility of a port of an inverter. The method includes: obtaining a first power value of a load at a previous moment and change information of a power supply type of the load and a second power value of the load at a current moment, where the power supply type includes mains power supply or non-mains power supply; adjusting a power of a non-load output port of an inverter based on the change information; and adjusting a power of a load output port of the inverter based on a magnitude relationship between the first power value and the second power value.

## Description

### TECHNICAL FIELD

This application relates to the field of power technologies, and in particular, to a power adjustment method and apparatus and a computer-readable storage medium.

### BACKGROUND

A small power grid includes a power generation device, a load, and an inverter. A mains supply, the power generation device, and the load are separately connected to the inverter, and the mains supply is further connected to the load. The mains supply may supply power to the load, and the inverter may transmit electric energy in the power generation device to the load, or may transmit electric energy in the power generation device to the mains supply.

To ensure safe and normal operating of the small power grid, a power of a port of the inverter needs to be adjusted. In an existing solution, the power of the port of the inverter is adjusted to a preset power based on different time periods, and power adjustment flexibility is low.

### TECHNICAL PROBLEM

An objective of the embodiments of this application is to provide a power adjustment method and apparatus and a computer-readable storage medium.

### SUMMARY

The following technical solutions are used in this application.

According to a first aspect, a power adjustment method is provided. The method includes: obtaining a first power value of a load at a previous moment and change information of a power supply type of the load and a second power value of the load at a current moment, where the power supply type includes mains power supply or non-mains power supply; adjusting a power of a non-load output port of an inverter based on the change information; and adjusting a power of a load output port of the inverter based on a magnitude relationship between the first power value and the second power value.

With reference to the first aspect, in some implementations of the first aspect, when the magnitude relationship indicates that the first power value is less than the second power value, the adjusting a power of a load output port of the inverter includes: determining a power adjustment quantity based on a power change value and a preset power adjustment step size, where the power change value is a difference between the second power value and the first power value; and successively adjusting the power of the load output port from the first power value to the second power value based on the preset power adjustment step size and the power adjustment quantity.

With reference to the first aspect, in some implementations of the first aspect, when the magnitude relationship indicates that the first power value is greater than the second power value, the adjusting a power of a load output port of the inverter includes: reducing the power of the load output port from the first power value to the second power value.

With reference to the first aspect, in some implementations of the first aspect, the non-load output port includes a mains output port, and when the change information indicates that the mains power supply changes into the non-mains power supply, adjustment of the power of the non-load output port includes: adjusting a power of the mains output port to 0 kilowatts.

With reference to the first aspect, in some implementations of the first aspect, the non-load output port includes a power generation device input port, and when the change information indicates that the non-mains power supply changes into the mains power supply, adjustment of the power of the non-load output port includes: adjusting a power of the power generation device input port to 0 kilowatts.

With reference to the first aspect, in some implementations of the first aspect, the method further includes: adjusting a control parameter of the inverter to a preset value when the change information indicates that the non-mains power supply changes into the mains power supply or when the change information indicates that the mains power supply changes into the non-mains power supply.

With reference to the first aspect, in some implementations of the first aspect, obtaining the first power value and the second power value includes: obtaining first information of a power meter of the load, where the first information includes the first power value and the second power value; or obtaining second information of a load power sensing device of the inverter when a power meter is not in an operating state, where the second information includes the first power value and the second power value.

According to a second aspect, a power adjustment apparatus is provided to implement the power adjustment method in the first aspect. The power adjustment apparatus includes corresponding modules, units, or means (means) for implementing the foregoing method. The modules, the units, or the means may be implemented by using hardware, software, or executing corresponding software by using hardware. The hardware or the software includes one or more modules or units corresponding to the foregoing functions.

With reference to the second aspect, in some implementations of the second aspect, the apparatus includes: an obtaining module and a processing module. The obtaining module is configured to obtain a first power value of a load at a previous moment and change information of a power supply type of the load and a second power value of the load at a current moment, where the power supply type includes mains power supply or non-mains power supply; the processing module is configured to adjust a power of a non-load output port of an inverter based on the change information; and the processing module is further configured to adjust a power of a load output port of the inverter based on a magnitude relationship between the first power value and the second power value.

According to a third aspect, a power adjustment apparatus is provided, including at least one processor and a memory configured to store instructions executable by the processor, where the processor is configured to execute the instructions, to implement the method provided in the first aspect and any possible implementation thereof.

According to a fourth aspect, a computer-readable storage medium is provided. When instructions in the computer-readable storage medium are executed by a processor in a power adjustment apparatus, the power adjustment apparatus is enabled to perform the method provided in the first aspect and any possible implementation thereof.

According to a fifth aspect, a computer program product including instructions is provided. When the computer program product runs on a computer, the computer is enabled to perform the method provided in the first aspect and any possible implementation thereof.

According to a sixth aspect, a chip system is provided, including a processor and an interface circuit. The interface circuit is configured to receive a computer program or instructions and transmit the computer program or the instructions to the processor. The processor is configured to execute the computer program or the instructions, to enable the chip system to perform the method provided in the first aspect and any possible implementation thereof.

For technical effects brought by any implementation of the second aspect to the sixth aspect, refer to the technical effects brought by different implementations of the first aspect. Details are not described herein again.

### BENEFICIAL EFFECTS

The beneficial effect of the power adjustment method provided in the embodiments of this application is as follows: The first power value of the load at the previous moment and the change information of the power supply type of the load and the second power value of the load at the current moment are obtained, the power of the non-load output port of the inverter is adjusted based on the change information, and the power of the load output port of the inverter is adjusted based on the magnitude relationship between the first power value and the second power value. Compared with an existing solution in which a power of a port of an inverter is adjusted to a preset power based on different time periods, the solution of this application adjusts a power of a port of the inverter based on power values of the load at the previous moment and the current moment and a change condition of the power supply type, thereby improving power adjustment flexibility of the port of the inverter.

### BRIEF DESCRIPTION OF THE DRAWINGS

To describe the technical solutions in embodiments of this application more clearly, the following briefly describes the accompanying drawings that need to be used in the embodiments or exemplary technical descriptions. Clearly, the accompanying drawings in the following descriptions show merely some embodiments of this application, and a person of ordinary skill in the art may still derive other drawings from these accompanying drawings without creative efforts.
FIG. 1 is a schematic diagram of an architecture of a power adjustment system according to this application;
FIG. 2 is a schematic flowchart of a power adjustment method according to this application;
FIG. 3 is a schematic flowchart of another power adjustment method according to this application;
FIG. 4 is a schematic diagram of a structure of a power adjustment apparatus according to this application; and
FIG. 5 is a schematic diagram of a structure of another power adjustment apparatus according to this application.

### DETAILED DESCRIPTION OF THE EMBODIMENTS

In description of this application, the term "a plurality of" means two or more unless otherwise specified. "At least one of the following items" or a similar expression means any combination of these items, including a single item or any combination of a plurality of items. For example, at least one of a, b, or c may represent a, b, c, a and b, a and c, b and c, or a, b, and c, where a, b, and c may be singular or plural.

In addition, to facilitate clear description of the technical solutions in the embodiments of this application, in the embodiments of this application, words such as "first" and "second" are used to distinguish between same items or similar items whose functions are basically the same. A person skilled in the art may appreciate that the words such as "first" and "second" do not limit a quantity or an execution order, and the words such as "first" and "second" do not necessarily indicate a difference.

In addition, in the embodiments of this application, words such as "example" or "for example" are used to indicate an example, illustration, or description. Any embodiment or design solution described by using "example" or "for example" in the embodiments of this application should not be interpreted as being more preferred or having more advantages than another embodiment or design solution. Exactly, use of the words such as "example" or "for example" is intended to present related concepts in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these specific features, structures, or characteristics may be combined in one or more embodiments in any appropriate manner. It should be understood that in the embodiments of this application, sequence numbers of the processes do not mean an execution sequence. The execution sequence of the processes should be determined based on functions and internal logic of the processes, and should not be construed as any limitation on the implementation processes of the embodiments of this application.

It may be understood that, in this application, "when..." and "if" refer to the corresponding processing in an objective situation, which is not a time limit, and does not require that a determining action is required during implementation, and does not mean that other restrictions exist.

It may be understood that some optional features in the embodiments of this application may not depend on another feature in some scenarios, for example, a solution on which the feature is currently based, may be independently implemented to resolve a corresponding technical problem and achieve a corresponding effect, or may be combined with another feature in some scenarios according to a requirement. Correspondingly, the apparatus provided in the embodiments of this application may also correspondingly implement these features or functions. Details are not described herein.

In this application, unless otherwise specified, a same or similar part of the embodiments may be mutually referenced. In the embodiments and the implementation methods in the embodiments of this application, if no special description or logical conflict exists, terms and/or descriptions between different embodiments and implementation methods in the embodiments are consistent and may be mutually referenced. Technical features in different embodiments and the implementation methods in the embodiments may be combined to form a new embodiment, implementation, or implementation method according to an internal logical relationship thereof. The following implementations of this application do not constitute a limitation on the protection scope of this application.

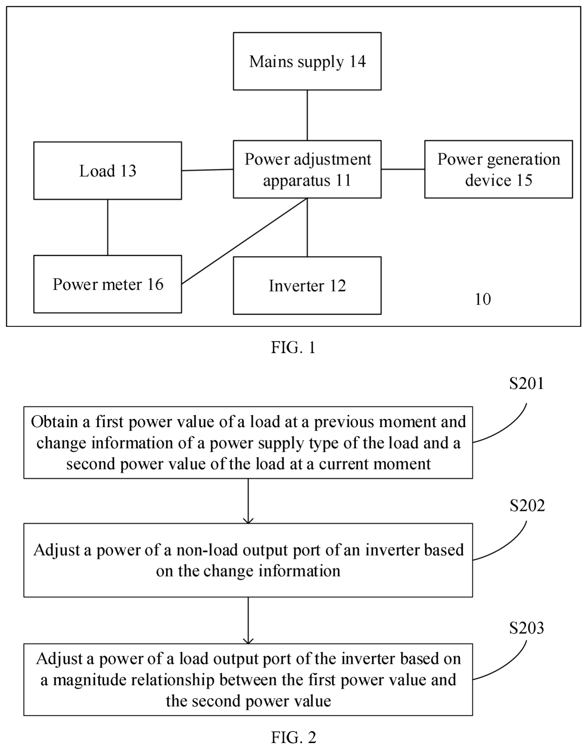

FIG. 1 is a schematic diagram of an architecture of a power adjustment system according to this application. A technical solution of an embodiment of this application may be applied to the power adjustment system shown in FIG. 1. As shown in FIG. 1, the power adjustment system 10 includes a power adjustment apparatus 11, an inverter 12, a load 13, a mains supply 14, a power generation device 15, and a power meter 16.

The power adjustment apparatus 11, the load 13, the mains supply 14, the power generation device 15, and the power meter 16 are separately connected to the inverter 12, and the power meter 16 is further connected to the load 13.

The power adjustment apparatus 11 may adjust a power of a port of the inverter 12.

Electric energy generated by the power generation device 15 may be transmitted to the load 13 through the inverter 12, or may be transmitted to the mains supply 14 through the inverter 12.

Electric energy in the mains supply 14 may be transmitted to the load 13 through the inverter 12.

The power meter 16 may detect a power of the load 13.

Ports of the inverter 12 may include a load output port and a non-load output port. The non-load output port may include a power generation device input port and a mains output port.

The load output port and the non-load output port may be located in a same location or different locations. This is not specifically limited in this application.

The power generation device input port may input the electric energy generated by the power generation device 15 to the inverter 12, and the mains output port may output the electric energy generated by the power generation device 15 to the mains supply 14.

The power generation device input port and the mains output port may be located in a same location or different locations. This is not specifically limited in this application.

It should be noted that the power adjustment apparatus 11 and the inverter 12 may be mutually independent devices, or may be integrated into a same device. This is not specifically limited in this application.

In some cases, the power adjustment system 10 may further include a battery and a photovoltaic panel. The battery may be charged or discharged, and the photovoltaic panel may generate electricity.

In the following embodiments provided in this application, an example in which the power adjustment apparatus 11 and the inverter 12 are disposed independently from each other is used for description in this application.

In actual application, a power adjustment method provided in an embodiment of this application may be applied to the power adjustment apparatus 11, or may be applied to an apparatus included in the power adjustment apparatus 11.

The following describes, with reference to accompanying drawings, the power adjustment method provided in an embodiment of this application with an example in which the power adjustment method is applied to the power adjustment apparatus 11.

FIG. 2 is a schematic flowchart of a power adjustment method according to this application. As shown in FIG. 2, the method includes the following steps.

S201: A power adjustment apparatus obtains a first power value of a load at a previous moment and change information of a power supply type of the load and a second power value of the load at a current moment.

The power supply type includes mains power supply or non-mains power supply.

It should be noted that duration between the previous moment and the current moment may be 1 second, or may be 0.1 second. This is not specifically limited in this application.

The load may be an air conditioner, or the load may be a heater, or the load may be a battery in a charging state. This is not specifically limited in this application.

The change information may indicate that the mains power supply changes into the non-mains power supply, or the change information may indicate that the non-mains power supply changes into the mains power supply.

The non-mains power supply may be gasoline generator power supply or photovoltaic panel power supply. This is not specifically limited in this application.

In a possible implementation, the power adjustment apparatus receives a message from an input device thereof. The message includes the first power value of the load at the previous moment and the change information of the power supply type and the second power value of the load at the current moment. The power adjustment apparatus obtains the first power value of the load at the previous moment and the change information of the power supply type and the second power value of the load at the current moment from the message.

In another possible implementation, first, the power adjustment apparatus receives a message from an input device thereof, where the message includes the change information of the power supply type at the current moment; and the power adjustment apparatus obtains the change information of the power supply type at the current moment from the message.

Then, the power adjustment apparatus obtains first information of a power meter of the load, where the first information includes the first power value and the second power value; and the power adjustment apparatus obtains the first power value and the second power value from the first information.

Alternatively, the power adjustment apparatus obtains second information of a load power sensing device of the inverter when a power meter is not in an operating state, where the second information includes the first power value and the second power value; and the power adjustment apparatus obtains the first power value and the second power value from the second information.

It should be noted that, in this possible implementation, for specific descriptions of obtaining the first power value and the second power value by the power adjustment apparatus, refer to related descriptions in a subsequent part of a specific implementation of this application. Details are not described in this application.

S202: The power adjustment apparatus adjusts a power of a non-load output port of an inverter based on the change information.

In a possible implementation, if the non-load output port includes a mains output port, when the change information indicates that the mains power supply changes into the non-mains power supply, the power adjustment apparatus adjusts a power of the mains output port to 0 kilowatts.

Based on this, when the change information indicates that the mains power supply changes into the non-mains power supply, it indicates that a mains supply does not supply power to the load in this case, but a power generation device supplies power to the load. The power of the mains output port is adjusted to 0 kilowatts, so that electric energy generated by the power generation device can be completely supplied to the load without being output to the mains supply, thereby improving stability of power supply of the load.

In another possible implementation, if the non-load output port includes a power generation device input port, when the change information indicates that the non-mains power supply changes into the mains power supply, the power adjustment apparatus adjusts a power of the power generation device input port to 0 kilowatts.

Based on this, when the change information indicates that the non-mains power supply changes into the mains power supply, it indicates that a mains supply restores power supply to the load in this case, and the load no longer requires electric energy from a power generation device. In this case, if the power generation device continues to generate electric energy, the electric energy generated by the power generation device is wasted. The power of the power generation device input port is adjusted to 0 kilowatts, to prevent the power generation device from continuing to generate electric energy, thereby improving utilization of electric energy.

S203: The power adjustment apparatus adjusts a power of a load output port of the inverter based on a magnitude relationship between the first power value and the second power value.

In a possible implementation, when the magnitude relationship indicates that the first power value is less than the second power value, the power adjustment apparatus determines a power adjustment quantity based on a power change value and a preset power adjustment step size; and then the power adjustment apparatus increases the power of the load output port from the first power value to the second power value based on the preset power adjustment step size and the power adjustment quantity.

The power change value is a difference between the second power value and the first power value.

It should be noted that, for specific descriptions of this possible implementation, refer to related descriptions in a subsequent part of a specific implementation of this application. Details are not described in this application.

In another possible implementation, when the magnitude relationship indicates that the first power value is greater than the second power value, the power adjustment apparatus reduces the power of the load output port from the first power value to the second power value.

In an example, when the second power value is 0 kilowatts, the power adjustment apparatus turns off the load output port, and then the power of the load output port is 0 kilowatts.

In another example, when the second power value is not 0 kilowatts, the power adjustment apparatus determines the difference between the second power value and the first power value, and reduces the power of the load output port by the difference based on the first power value, so that the power of the load output port is the second power value.

Based on this solution, the first power value of the load at the previous moment and the change information of the power supply type of the load and the second power value of the load at the current moment are obtained, then the power of the non-load output port of the inverter is adjusted based on the change information, and the power of the load output port of the inverter is adjusted based on the magnitude relationship between the first power value and the second power value. Compared with an existing solution in which a power of a port of an inverter is adjusted to a preset power based on different time periods, the solution of this application adjusts a power of a port of the inverter based on power values of the load at the previous moment and the current moment and a change condition of the power supply type, thereby improving power adjustment flexibility of the port of the inverter.

The foregoing generally describes the power adjustment method provided in this application. The following further describes the power adjustment method provided in this application with reference to the accompanying drawings.

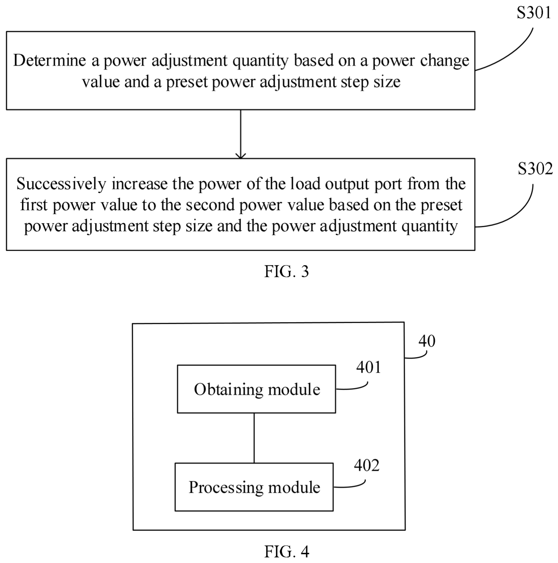

In a design, when the magnitude relationship indicates that the first power value is less than the second power value, refer to FIG. 3, which is a schematic flowchart of another power adjustment method according to this application. As shown in FIG. 3, S203 provided in a specific implementation of this application may specifically include the following plurality of steps.

S301: The power adjustment apparatus determines a power adjustment quantity based on a power change value and a preset power adjustment step size.

The power change value is a difference between the second power value and the first power value.

In a possible implementation, the power adjustment apparatus determines the difference between the second power value and the first power value as the power change value, and then the power adjustment apparatus divides the power change value by the preset power adjustment step size to obtain a quotient value and a remainder.

If the remainder is 0, the power adjustment apparatus determines the quotient value as the power adjustment quantity.

If the remainder is not 0, the power adjustment apparatus determines the quotient value+1 as the power adjustment quantity.

S302: The power adjustment apparatus successively increases the power of the load output port from the first power value to the second power value based on the preset power adjustment step size and the power adjustment quantity.

In a possible implementation, if the power adjustment quantity is the quotient value, the power adjustment apparatus increases the power of the load output port by the preset power adjustment step size each time based on the first power value, so that the power of the load output port is the second power value after an increase quantity is the power adjustment quantity.

If the power adjustment quantity is the quotient value+1, the power adjustment apparatus increases the power of the load output port by the preset power adjustment step size each time based on the first power value, so that the power of the load output port is a third power value after an increase quantity is the quotient value.

Then, the power adjustment apparatus subtracts the third power value from the second power value to obtain a target power value.

Then, the power adjustment apparatus increases the power of the load output port by the target power value based on the third power value, so that the power of the load output port is the second power value.

Based on this solution, the power adjustment quantity is determined based on the power change value and the preset power adjustment step size; and the power of the load output port may be increased from the first power value to the second power value based on the preset power adjustment step size and the power adjustment quantity, thereby preventing the first power value from being directly adjusted to the second power value, avoiding a failure of the inverter caused by power surge, and improving stability of the inverter.

In a design, the power adjustment apparatus adjusts a control parameter of the inverter to a preset value when the change information is used to indicate that the non-mains power supply changes into the mains power supply or when the change information is used to indicate that the mains power supply changes into the non-mains power supply.

It should be noted that the control parameter may be a user-configurable parameter of the inverter and/or a non-user-configurable parameter of the inverter.

The preset value may also be referred to as an initial value.

Based on this solution, when the change information is used to indicate that the non-mains power supply changes into the mains power supply or the change information is used to indicate that the mains power supply changes into the non-mains power supply, it indicates that the power supply type of the load changes. In this case, the control parameter of the inverter is adjusted to the preset value, to avoid an impact of a control parameter corresponding to a last power supply type on current power supply.

In a design, in S201 provided in a specific implementation of this application, obtaining the first power value and the second power value may specifically include the following steps.

The power adjustment apparatus obtains first information of a power meter of the load.

The first information includes the first power value and the second power value.

In a possible implementation, the power adjustment apparatus sends a first information request message to the power meter of the load. Correspondingly, the power meter receives the first information request message from the power adjustment apparatus.

The power meter sends a first information response message including the first information to the power adjustment apparatus. Correspondingly, the power adjustment apparatus receives the first information response message from the power meter.

The power adjustment apparatus obtains the first information from the first information response message.

In a design, in S201 provided in a specific implementation of this application, obtaining the first power value and the second power value may specifically include the following steps.

The power adjustment apparatus obtains second information of a load power sensing device of the inverter when a power meter is not in an operating state.

The second information includes the first power value and the second power value.

In a possible implementation, the power adjustment apparatus sends a first information request message to the power meter of the load.

If the power adjustment apparatus does not receive a first information response message from the power meter within preset duration, the power adjustment apparatus sends a second information request message to the load power sensing device. Correspondingly, the load power sensing device receives the second information request message from the power adjustment apparatus.

The load power sensing device sends a second information response message including the second information to the power adjustment apparatus. Correspondingly, the power adjustment apparatus receives the second information response message from the power meter.

The power adjustment apparatus obtains the second information from the first information response message.

The solutions provided in the embodiments of this application are mainly described above from a perspective of performing the power adjustment method by using the power adjustment apparatus. To implement the foregoing functions, corresponding hardware structures and/or software modules for performing the functions are included the power adjustment apparatus. A person skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In embodiments of this application, the power adjustment apparatus may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. Optionally, division into the modules in the embodiments of this application is an example, and is merely logical function division. During actual implementation, there may be another division manner. In addition, the "module" herein may refer to an application-specific integrated circuit (application-specific integrated circuit, ASIC), a circuit, a processor that executes one or more software or firmware programs and a memory, an integrated logic circuit, and/or another component that can provide the foregoing functions.

When division into the functional modules is used, refer to FIG. 4, which is a schematic diagram of a structure of a power adjustment apparatus. As shown in FIG. 4, the power adjustment apparatus 40 includes an obtaining module 401 and a processing module 402.

In some embodiments, the power adjustment apparatus 40 may further include a storage module (not shown in FIG. 4) configured to store program instructions and data.

The obtaining module 401 is configured to obtain a first power value of a load at a previous moment and change information of a power supply type of the load and a second power value of the load at a current moment, where the power supply type includes mains power supply or non-mains power supply; the processing module 402 is configured to adjust a power of a non-load output port of an inverter based on the change information; and the processing module 402 is further configured to adjust a power of a load output port of the inverter based on a magnitude relationship between the first power value and the second power value.

Optionally, when the magnitude relationship indicates that the first power value is less than the second power value, the processing module 402 is further configured to determine a power adjustment quantity based on a power change value and a preset power adjustment step size, where the power change value is a difference between the second power value and the first power value; and successively adjust the power of the load output port from the first power value to the second power value based on the preset power adjustment step size and the power adjustment quantity.

Optionally, when the magnitude relationship indicates that the first power value is greater than the second power value, the processing module 402 is further configured to reduce the power of the load output port from the first power value to the second power value.

Optionally, the non-load output port includes a mains output port, and when the change information indicates that the mains power supply changes into the non-mains power supply, the processing module 402 is configured to adjust a power of the mains output port to 0 kilowatts.

Optionally, the non-load output port includes a power generation device input port, and when the change information indicates that the non-mains power supply changes into the mains power supply, the processing module 402 is configured to adjust a power of the power generation device input port to 0 kilowatts.

Optionally, The processing module 402 is further configured to adjust a control parameter of the inverter to a preset value when the change information indicates that the non-mains power supply changes into the mains power supply or when the change information indicates that the mains power supply changes into the non-mains power supply.

Optionally, the obtaining module 401 is configured to obtain first information of a power meter of the load, where the first information includes the first power value and the second power value; or obtain second information of a load power sensing device of the inverter when a power meter is not in an operating state, where the second information includes the first power value and the second power value.

All related content of the steps in the foregoing method embodiment may be cited to function descriptions of corresponding functional modules. Details are not described herein again.

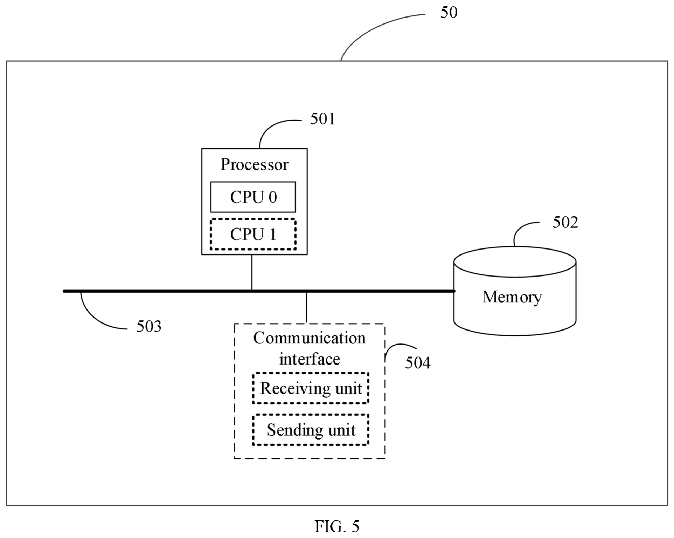

When the functions of the functional modules are implemented in a form of hardware, refer to FIG. 5, which is a schematic diagram of a structure of another power adjustment apparatus. As shown in FIG. 5, the power adjustment apparatus 50 includes a processor 501, a memory 502, and a bus 503. The processor 501 may be connected to the memory 502 by using the bus 503.

The processor 501 is a control center of the power adjustment apparatus 50, and may be a processor, or may be a general name of a plurality of processing elements. For example, the processor 501 may be a general central processing unit (central processing unit, CPU), another general processor, or the like. The general processor may be a microprocessor, any conventional processor, or the like.

In an embodiment, the processor 501 may include one or more CPUs, such as a CPU 0 and a CPU 1 shown in FIG. 5.

The memory 502 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc storage medium or another magnetic storage device, or any other medium capable of carrying or storing desired program code in a form of instructions or data structures and capable of being accessed by a computer, but is not limited thereto.

In a possible implementation, the memory 502 may exist independently of the processor 501, and the memory 502 may be connected to the processor 501 by using the bus 503, to store instructions or program code. When invoking and executing the instructions or the program code stored in the memory 502, the processor 501 can implement the power adjustment method provided in the embodiments of this application.

In another possible implementation, the memory 502 may alternatively be integrated with the processor 501.

The bus 503 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, or the like. For ease of representation, only one thick line is used to represent the bus in FIG. 5, but this does not mean that there is only one bus or only one type of bus.

It should be noted that the structure shown in FIG. 5 does not constitute a limitation on the power adjustment apparatus 50. In addition to the components shown in FIG. 5, the power adjustment apparatus 50 may include more or fewer components than those shown in the figure, combine some components, or have different component arrangements.

In an example, with reference to FIG. 4, functions implemented by the obtaining module 401 and the processing module 402 in the power adjustment apparatus 40 are the same as the functions of the processor 501 in FIG. 5.

Optionally, as shown in FIG. 5, the power adjustment apparatus 50 provided in this embodiment of this application may further include a communication interface 504.

The communication interface 504 is configured to connect to another device by using a communication network. The communication network may be an Ethernet, a radio access network, a wireless local area network (wireless local area network, WLAN), or the like. The communication interface 504 may include a receiving unit configured to receive data and a sending unit configured to send data.

In a possible implementation, in the power adjustment apparatus 50 provided in this embodiment of this application, the communication interface 504 may be further integrated into the processor 501. This is not specifically limited in this embodiment of this application.

As a possible product form, the power adjustment apparatus in this embodiment of this application may alternatively be implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

According to the foregoing descriptions of the implementations, a person skilled in the art may clearly understand that, for convenience and brevity of description, division of the foregoing functional units is merely used as an example for description. In actual application, the foregoing functions may be allocated to different functional units according to a requirement, that is, an internal structure of the apparatus is divided into different functional units, to complete all or some of the functions described above. For detailed working processes of the foregoing system, apparatus, and unit, refer to corresponding processes in the foregoing method embodiments. Details are not described herein again.

An embodiment of this application further provides a computer-readable storage medium having a computer program or instructions stored thereon. When the computer program or the instructions are executed, a computer is enabled to perform the steps in the method procedure shown in the foregoing method embodiment.

An embodiment of this application provides a computer program product including instructions. When the instructions are run on a computer, the computer is enabled to perform the steps in the method procedure shown in the foregoing method embodiment.

An embodiment of this application provides a chip system, including a processor and an interface circuit. The interface circuit is configured to receive a computer program or instructions and transmit the computer program or the instructions to the processor. The processor is configured to execute the computer program or the instructions, to enable the chip system to perform the steps in the method procedure shown in the foregoing method embodiment.

The computer-readable storage medium may be, for example but not limited to, an electronic, magnetic, optical, electromagnetic, infrared, or semiconductor system, apparatus, or component, or any combination thereof. A more specific example (a non-exhaustive list) of the computer-readable storage medium includes: an electrical connection with one or more wires, a portable computer disk, and a hard disk. The computer-readable storage medium is not only a random access memory (Random Access Memory, RAM), but also includes a read-only memory (Read-Only Memory, ROM), an erasable programmable read-only memory (Erasable Programmable Read-Only Memory, EPROM), a register, a hard disk, an optical fiber, a compact disc read-only memory (Compact Disc Read-Only Memory, CD-ROM), an optical storage device, a magnetic storage device, any proper combination thereof, or any other form of computer-readable storage medium in the art. An example storage medium is coupled to the processor, to enable the processor to read information from and write information to the storage medium. Certainly, the storage medium may alternatively be an integral part of the processor. The processor and the storage medium may be located in an ASIC. In this embodiment of this application, the computer-readable storage medium may be any tangible medium that includes or stores a program, and the program may be used by or in combination with an instruction execution system, apparatus, or component.

The power adjustment apparatus, the computer-readable storage medium, and the computer program product provided in the embodiments may be applied to the foregoing power adjustment method provided in the embodiments. Therefore, for a technical effect that can be obtained by the power adjustment apparatus, the computer-readable storage medium, and the computer program product, refer to the foregoing method embodiment. Details are not described herein in this embodiment of this application.

Although this application is described with reference to the embodiments herein, in a process of implementing the claimed protection in this application, another variation of the disclosed embodiments may be understood and implemented by a person skilled in the art by viewing the accompanying drawings, the disclosed content, and the appended claims. In the claims, the word "comprising" (comprising) does not rule out other components or steps, and "a/an" or "one" does not rule out "a plurality of". A single processor or another unit may implement several functions listed in the claims. Some measures are documented in different dependent claims, but this does not mean that these measures cannot be combined to produce a good effect.

Although this application is described with reference to specific features and embodiments, it is clear that various modifications and combinations may be made to this application without departing from the spirit and scope of this application. Correspondingly, this specification and the accompanying drawings are merely example descriptions of this application defined by the appended claims and are considered to cover any and all of modifications, variations, combinations, or equivalents within the scope of this application. Obviously, a person skilled in the art can make various modifications and variations to this application without departing from the spirit and scope of this application. In this way, this application is also intended to include these modifications and variations, provided that these modifications and variations of this application fall within the scope of the claims of this application and equivalent technologies thereof.

## Claims

1. A power adjustment method, **characterized by** comprising:
obtaining a first power value of a load at a previous moment and change information of a power supply type of the load and a second power value of the load at a current moment, wherein the power supply type comprises mains power supply or non-mains power supply;
adjusting a power of a non-load output port of an inverter based on the change information;
and
adjusting a power of a load output port of the inverter based on a magnitude relationship between the first power value and the second power value.

2. The method according to claim 1, **characterized in that** when the magnitude relationship indicates that the first power value is less than the second power value, the adjusting a power of a load output port of the inverter comprises:
determining a power adjustment quantity based on a power change value and a preset power adjustment step size, wherein the power change value is a difference between the second power value and the first power value; and
successively increasing the power of the load output port from the first power value to the second power value based on the preset power adjustment step size and the power adjustment quantity.

3. The method according to claim 1, **characterized in that** when the magnitude relationship indicates that the first power value is greater than the second power value, the adjusting a power of a load output port of the inverter comprises:
reducing the power of the load output port from the first power value to the second power value.

4. The method according to claim 1, **characterized in that** the non-load output port comprises a mains output port, and when the change information indicates that the mains power supply changes into the non-mains power supply, the adjusting a power of a non-load output port of an inverter comprises:
adjusting a power of the mains output port to 0 kilowatts.

5. The method according to claim 1, **characterized in that** the non-load output port comprises a power generation device input port, and when the change information indicates that the non-mains power supply changes into the mains power supply, the adjusting a power of a non-load output port of an inverter comprises:
adjusting a power of the power generation device input port to 0 kilowatts.

6. The method according to any one of claims 1 to 5, **characterized by** further comprising:
adjusting a control parameter of the inverter to a preset value when the change information indicates that the non-mains power supply changes into the mains power supply or when the change information indicates that the mains power supply changes into the non-mains power supply.

7. The method according to any one of claims 1 to 5, **characterized in that** obtaining the first power value and the second power value comprises:
obtaining first information of a power meter of the load, wherein the first information comprises the first power value and the second power value; or
obtaining second information of a load power sensing device of the inverter when a power meter is not in an operating state, wherein the second information comprises the first power value and the second power value.

8. A power adjustment apparatus, **characterized by** comprising an obtaining module and a processing module, wherein
the obtaining module is configured to obtain a first power value of a load at a previous moment and change information of a power supply type of the load and a second power value of the load at a current moment, wherein the power supply type comprises mains power supply or non-mains power supply;
the processing module is configured to adjust a power of a non-load output port of an inverter based on the change information; and
the processing module is further configured to adjust a power of a load output port of the inverter based on a magnitude relationship between the first power value and the second power value.

9. A power adjustment apparatus, **characterized by** comprising a processor, wherein the processor is coupled to a memory, the memory is configured to store a program or instructions, and when the program or the instructions are executed by the processor, the apparatus is enabled to perform the method according to any one of claims 1 to 7.

10. A computer-readable storage medium, having a computer program or instructions stored thereon, **characterized in that** when the computer program or the instructions are executed, a computer is enabled to perform the method according to any one of claims 1 to 7.
